# EUROPEAN PATENT APPLICATION

(11) **EP 4 755 196 A1**
(43) Date of publication of application: **10.06.2026**
(21) Application number: 25220504.2
(22) Date of filing: 03.12.2025
(51) Int. Cl.: A23G 9/04, A23G 9/12, A23G 9/22, G06N 3/02, G06N 3/08, G06N 20/00, G06N 3/088, G06N 3/0895, G06N 3/09

(54) **METHOD, IMPLEMENTED BY AT LEAST A COMPUTER, FOR OPTIMIZING THE OPERATION OF AT LEAST A MACHINE FOR THE PRODUCTION OF LIQUID OR SEMILIQUID OR SEMISOLID FOOD PRODUCTS, IT PRODUCT AND PRODUCTION SYSTEM**

(30) Priority: 06.12.2024 IT 202400027810
(71) Applicant: Ali Group S.r.l. - Carpigiani, 20063 Cernusco sul Naviglio, Milano (IT)
(72) Inventor: TASSI, Federico, 40122 BOLOGNA (IT); LAZZARINI, Roberto, 42100 REGGIO EMILIA (IT); STEFANELLI, Cesare, 40123 BOLOGNA (IT); TORTONESI, Mauro, 44123 FERRARA (IT); BELLODI, Elena, 44123 FERRARA (IT); DAHDAL, Simon, 40018 SAN PIETRO IN CASALE (BOLOGNA) (IT)
(74) Representative: Milli, Simone

(57) **Abstract**

A method, implemented by at least a computer (7), is provided, for optimizing the operation of at least a machine (1A; 1B) for the production of liquid or semiliquid food products, wherein said machine (1A; 1B) is provided with:
- a processing container (2),
- a stirrer (3) arranged inside said container (2);
- a plurality of sensors (S),
- a plurality of actuators (11, 12, 13),
- a control unit (5) comprising an artificial intelligence control module (6), connected to said sensors (S) and actuators and configured to define a pre-trained classifier (CL), the control module (6) being trained using a first dataset;
the method comprising the following steps:
- labelling information received from the control unit (5) by assigning predetermined labels to said information, said labels representing a balance of the ingredients of the mixture being processed in the container (2),
- running a training procedure of the artificial intelligence control module (6) using a second dataset comprising the aforesaid information having predetermined labels, to derive an additional artificial intelligence control module defining a classifier replacing the pre-trained artificial intelligence control module (6);
- transmitting instructions for replacing the control module (6) with the additional substitutive artificial intelligence control model to the control unit (5).

## Description

The present invention relates to a method, implemented by at least a computer, for optimizing the operation of at least a machine for the production of liquid or semiliquid food products, an **IT** product and a system for the production of liquid or semiliquid food products.

The artisan ice-cream production field sees an increasing interest in advanced machines allowing to reduce waste during the production process and to improve the quality of the final product constantly. Artisan ice-cream making is in fact a complex process requiring the simultaneous control of many functional parameters, as temperatures, times, stirring speeds and viscosity indirect values of the product being processed. These factors act directly on ice-cream texture, creaminess and compactness, thus influencing its organoleptic properties.

One of the most common problems while using the current machines for ice-cream production is the difficulty to keep quality high and uniform standards, above all with unbalanced or not optimally prepared mixtures. Traditional machines, in fact, are not provided with advanced systems able to detect errors or anomalies promptly during the churning process. This monitoring and control lack can lead to an ice-cream production not satisfying the producer and final consumer expectations, thus compromising the final product quality and potentially generating waste increase, with economic negative consequences for artisanal labs.

So, there is a particular need to implement technological solutions allowing a greater control of the operating parameters, thus guaranteeing an optimization of production process and a reduction of food product losses. Moreover, the continuous innovation research of the ice-cream makers, with the development of ever more refined recipes and unconventional mixtures, requires machines for ice-cream production able to adapt to new formulations without compromising the final ice-cream quality. But the machines currently available on the market are not sufficiently intelligent and flexible to manage new mixtures or not standardized ingredients optimally, as the ones used in vegan ice-creams, with no lactose or with reduced sugar content.

Consequently, technological solutions are needed which offer greater adaptability and automatic control, thus guaranteeing the same results as the ones of a classical artisan production, independently of the recipe complexity.

Aim of the present invention is to satisfy the above cited needs and to overcome said limits of the known art by providing a method, implemented by a computer, for optimizing the operation of at least a machine for the production of products, an IT product for carrying out such method and a production system.

Moreover, aim of the present invention is to provide a method, implemented by a computer, for optimizing the operation of at least a machine for the production of products, an IT product for carrying out such method and a production system allowing to process particularly new mixtures as well, thus reducing waste and obtaining a particularly high quality product.

The technical features of the invention, according to said aims, can be clearly inferred by the following claims, and its advantages will be clearer from the following detailed description, with reference to the appended drawings representing a purely illustrative and not limiting embodiment, in which:

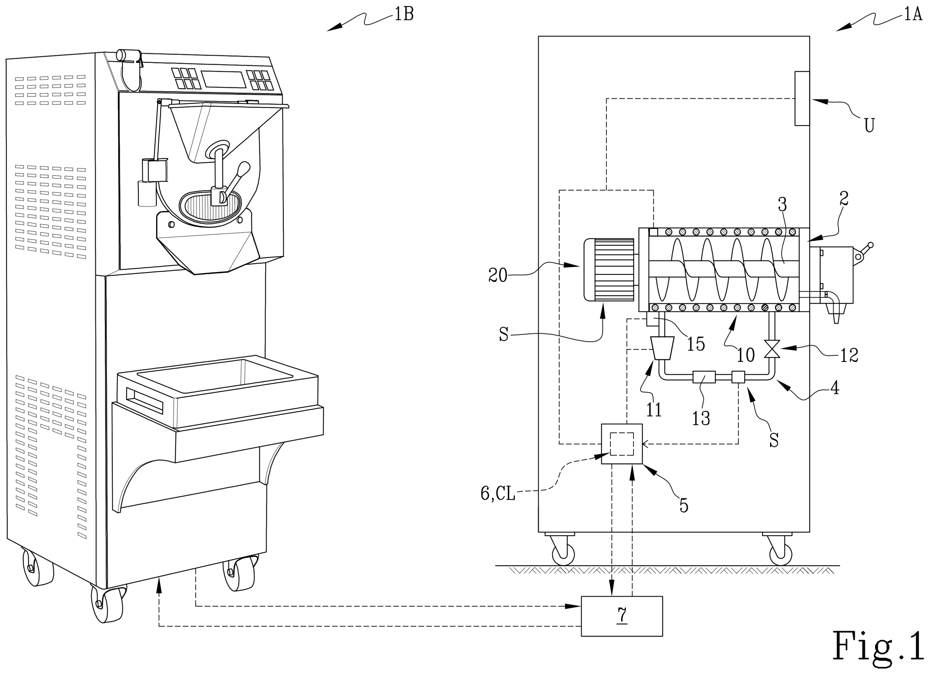

- figure 1 shows a schematic view of a system for making liquid, semiliquid or semisolid products, object of the present invention;

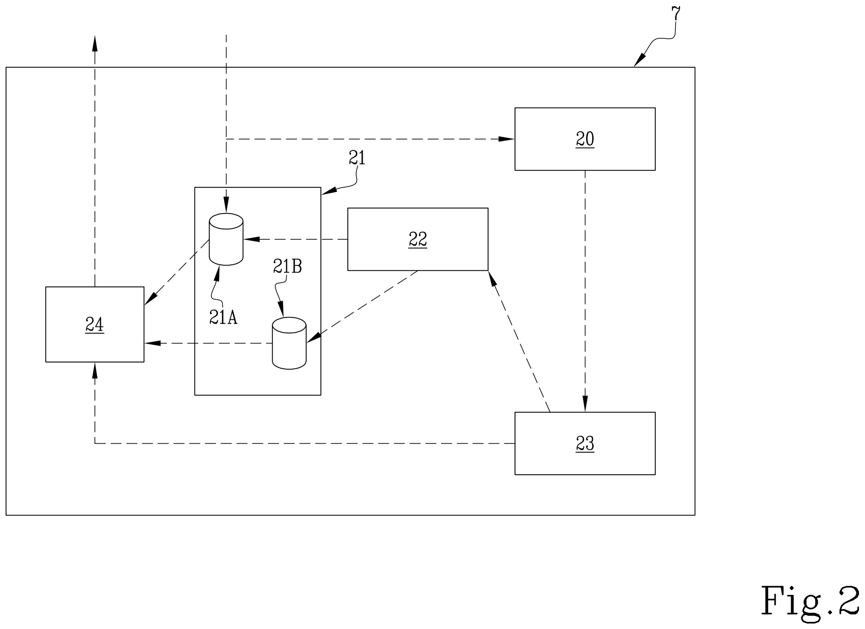

- figure 2 shows a schematic view of a particular of the system for making liquid, semiliquid products, object of the present invention of figure 1;
- figure 3 shows a schematic view of an information labelling step based on the method object of the invention.

According to the invention, a method, implemented by at least a computer 7 is provided, for optimizing the operation of at least a machine 1A, 1B for the production of liquid or semiliquid food products.

More generally the machine 1A, 1B is a machine for the production of liquid or semiliquid food products.

For simplicity only, in the appended drawings it is shown a machine 1 for ice-cream production, the figures and the present description not being considered limiting.

It is to be observed that the machine 1 allows to produce mainly products of ice-cream field or cold desserts.

More preferably, the machine 1 allows to produce artisan and/or soft ice-cream, sorbets, creams, granita.

The machine (1A, 1B) is preferably a machine for processing products of the ice-cream field (artisan ice-cream, sorbets, soft ice-cream, granita) or cold desserts.

The machine (1A, 1B) comprises:
- a processing container 2,
- a stirrer 3 arranged inside said container 2,
- a plurality of sensors S,
- a plurality of actuators (11, 12, 13),
- a control unit 5 comprising an artificial intelligence control module 6, connected to said sensors S and actuators (11, 12, 13) and configured to define a pre-trained classifier CL.

According to another aspect, the machine 1 comprises a U interface connected to the control unit 5 to send or receive information.

The U interface is preferably provided with controls (or any kind, for example tactile, vocal or physical controls) and/or with a display.

The control module 6 is trained using a first dataset.

The control module 6 is preferably pre-trained by collecting data from sensors (of pressure, temperature, compactness, etc.) on the following mixtures:
- balanced mixture;
- high fat unbalanced mixture;
- high sugar (saccharose) unbalanced mixture;
- low sugar (saccharose) unbalanced mixture;
- high water unbalanced mixture.

More precisely, the mixtures used for training are the following:
- balanced mixture;
- high fat unbalanced mixture (preferably cream) with a first predetermined percentage (preferably corresponding to 3 times the optimal balance);
- high fat unbalanced mixture (preferably cream) with a second predetermined percentage (preferably corresponding to 4.4 times the optimal balance);
- high sugar (saccharose) unbalanced mixture with a first predetermined percentage (preferably corresponding to + 1/3 with respect to the optimal balance);
- high sugar (saccharose) unbalanced mixture with a second predetermined percentage (preferably corresponding to + 2/3 with respect to the optimal balance);
- high sugar (saccharose) unbalanced mixture with a third predetermined percentage (preferably corresponding to 100% with respect to the optimal balance);
- low sugar (saccharose) unbalanced mixture with a first predetermined percentage (preferably corresponding to - 1/3 with respect to the optimal balance);
- low sugar (saccharose) unbalanced mixture with a second predetermined percentage (preferably corresponding to - 2/3 with respect to the optimal balance);
- high water unbalanced mixture (preferably corresponding to + 10% with respect to the optimal balance).

According to an aspect, the first data collected relating to the previously described mixtures comprise:
- a compactness or viscosity of the product being processed in the container 2;
- an operating temperature of the container 2;
- an operating temperature of the heat transfer fluid or a pressure of the heat transfer fluid in a predetermined point of the thermodynamic system 4;
- an operating temperature of the heat transfer fluid flowing into the evaporator 10 associated with the container 2;
- an operating temperature of the heat transfer fluid flowing out of the evaporator 10 associated with the container 2;
- an operating pressure of the heat transfer fluid flowing out of the compressor 11;
- a rotation speed of the stirrer 3;
- an operating pressure of the heat transfer fluid flowing out of the evaporator 10;
- a degree of opening of the throttle element 12.

The method, object of the invention, comprises the following steps:
- labelling information received from the control unit 5, by assigning predetermined labels to said information, said labels representing a balance of the ingredients of the mixture being processed in the container 2;
- running a training procedure of the artificial intelligence control module 6, outside said control unit 5, using a second dataset comprising the aforesaid information having predetermined labels, to derive an additional artificial intelligence control module defining a classifier replacing the pre-trained artificial intelligence control module 6;
- transmitting instructions for replacing the control module 6 with the additional artificial intelligence control model.

It is to be observed that the term "information" means information transmitted by the control unit 5, such for example one or more of the following types:
- data from sensors connected to the control unit 5;
- data from actuators connected/actuated/controlled by the control unit 5;
- processing of the control unit 5;
- information transmitted by the user interface U (being part of the machine 1A, 1B).

It is to be observed that the definition "labels representing a balance of the ingredients" means labels representing the fact that the mixture is balanced or not with respect to one or more ingredients (where balanced means having an optimal percentage of one or more ingredients).

Such labels can be related to or comprise, for example, a plurality of balance/unbalance classes.

Preferably, the method is implemented by a processing unit 7, which can be of centralized and/or distributed kind.

It is to be observed that some modules of such processing unit 7 can be contained also inside the machine 1 or inside the control unit 5.

According to the invention, the artificial intelligence control module 6 is essentially re-trained only with a portion of the received information, the one with a predetermined label.

It is to be observed that according to the previously described method, the control module 6 can be advantageously re-trained using data (i.e. second data) considered, by means of the previous step of labelling, representing an optimal operation of the machine.

In this way, it is possible to re-train the control module 6 extremely rapidly: the re-training occurs in fact starting from the current configuration of the control module 6 (e.g. from the current weights in case the control module 6 is defined by a neural network), using data with predetermined labels.

It is to be observed that, preferably, the training of the control module 6 does not occur inside the control unit 5; the training of the control module 6 is carried out by the processing unit 7 outside the control unit 5. In this way, advantageously, the control module 6 provided in the control unit 5 can continue to have control on the actuators of the machine 1, while the processing unit 7 trains a clone of the control module 6.

It is to be observed that, advantageously, the additional artificial intelligence control module is identical, in its IT structure, to the pre-trained artificial intelligence control module 6.

In this way the training using the second data is considerably faster.

The model updating is essentially carried out by a fine tuning.

It is to be observed that training a model starting from original weights is a considerably advantageous operation, since it is not expensive from a computational point of view.

The additional model, trained on data with predetermined labels (for example, advantageously, data with balanced mixtures) is surely able to improve control precision of the machine 1A, 1B.

Advantageously, this allows to handle a variation of the operating conditions of the machine 1A, 1B optimally, thus reducing processing waste.

For example:
- the method allows to carry out a fast re-training of the classification module 6 as a result of a change of the kind of mixtures processed, so the machine can be rapidly adapted to the new variety of liquid or semiliquid food products;
- the method allows to carry out a fast re-training of the classification module 6 as a result of a change, which can modify for example the environmental conditions where the machine works (outer temperatures, humidity, etc.), so to optimize the operation of the machine;
- the method allows to carry out a fast re-training of the classification module 6 as a result of a degradation or more generally of a modification of the performance of some elements of the machine, which can influence the quality of the final product (alteration of one or more elements of the thermodynamic system, etc.), so to optimize the operation of the machine. According to another aspect, the step of transmitting the instructions for replacing the control module 6 with the additional artificial intelligence control model comprises a step of transmitting parameters representing the additional control module.

According to this aspect, only the parameters representing the artificial intelligence mathematical model of the control module are transmitted and not the model architecture.

For example, in case of a control module with neural network, only the weights assigned to the single neurons are transmitted, and not the network architecture (which remains the same between the control module 6 and the substitutive control module).

According to an aspect, said additional pre-trained artificial intelligence control module comprises a neural network and the step of transmitting parameters representing the additional control module comprises a step of transmitting a plurality of training weights of the neural network.

More generally, it is to be observed that the control module 6 can be an artificial intelligence classifier of any type, for example:
- a neural network;
- a neural network and additional artificial intelligence sub-modules configured to implement the so called "attention", according to transformer architecture;
- one or more decision trees, for example a Random Forest model;
- a classification module configured to define distance and kernel measures on the time series, as for example k-nearest neighbour (k-NN) or support vector machine (SVM), respectively;
- a "support vector machine" type model;
- one or more binary classifiers of kernel-based SVM type.

According to another aspect, the step of labelling information received from the control unit 5, by assigning predetermined labels to said information, comprises a step of associating said information with labels at least representing:
- a balanced class, corresponding to a mixture being processed, which is balanced with respect to one or more ingredients,
- and an unbalanced class, corresponding to a mixture being processed, which is unbalanced with respect to one or more ingredients.

It is to be observed that the definition unbalanced mixture with respect to an ingredient means a mixture whose proportion of that ingredient deviates from the optimal one (theoretical). The definition balanced mixture with respect to an ingredient means instead a mixture whose proportion of that ingredient is optimal (theoretical).

According to another aspect, the second dataset comprises labels at least representing a balanced class, corresponding to a mixture being processed which is balanced with respect to one or more ingredients.

Advantageously, it is to be observed that the fact to train the model 6 with labels of the balanced class causes the control module 6 to be trained with data relating to an optimal mixture flowing in.

According to another aspect, the machine 1 comprises a thermodynamic system 4 having a throttle element 12, a compressor 11 and an evaporator 10. Moreover, the thermodynamic system 4 comprises a condenser 13.

According to another aspect, the machine 1 comprises a motor 20 connected to the stirrer 3.

Preferably, the step of labelling information received from the control unit 5, assigning predetermined labels to said information, comprises a step of assigning said labels to information on the basis of the value of one or more of the following parameters received from the control unit 5:
- a compactness or viscosity of the product being processed in the container 2;
- an operating temperature of the container 2;
- an operating temperature of the heat transfer fluid or a pressure of the heat transfer fluid in a predetermined point of the thermodynamic system 4;
- an operating temperature of the heat transfer fluid flowing into the evaporator 10 associated with the container 2;
- an operating temperature of the heat transfer fluid flowing out of the evaporator 10 associated with the container 2;
- an operating pressure of the heat transfer fluid flowing out of the compressor 11;
- an operating pressure of the heat transfer fluid flowing out of the evaporator 10;
- a rotation speed of the stirrer 3;
- a degree of opening of the throttle element 12.

According to another aspect, the step of labelling comprises a step of using a machine learning algorithm of unsupervised type.

According to another aspect, the step of labelling comprises using clustering algorithms (for example K-means, DBSCAN) to identify patterns and groupings in information, advantageously without the need of predetermined labels.

The advantage of this aspect is that no predetermined labels are required, for example labels previously defined by the user; so, such method is particularly useful to explore great datasets and to find out hidden patterns.

In this case, data labelling occurs by means of automatic grouping of data in cluster based on similar features or patterns. Concretely, labelling by means of clustering algorithms occurs by following the next steps:
- acquiring information about data of not labelled tests and some metadata (provided by a supervisor module 9, better described in the following);
- carrying out a data pre-processing step, preferably comprising a data selection and normalization step. This step can comprise steps as: managing lacking values, variable shift, categories coding, embedding transformations by means of pre-trained Constrastive Learning models;
- applying the clustering algorithm to pre-processed data (such step comprises the selection of a suitable algorithm, as for an illustrative and not limiting example, K-means);
- analysing data features and cluster groupings on the basis of their features resemblance (on the basis of metadata as well provided by the supervisor model, such for example the number of clusters which will be predetermined on the basis of the various identified unbalance classes). According to this method, there are obtained one or more of:
- assigned clusters (each datum is assigned to a specific cluster. For example, each test mixture is labelled as balanced or belonging to the unbalanced class, class 1, class 2, class 3, etc.).
- Centroids or cluster representatives (information about average features or representing each cluster are provided, helping to interpret what distinguishes a group from the other one, which will be used as metadata for the next labelling processes).

Yet, according to another aspect, said algorithm is a clustering algorithm. Yet, according to another aspect, the labelling step comprises a step of using clustering algorithms to identify patterns and/or groupings in information.

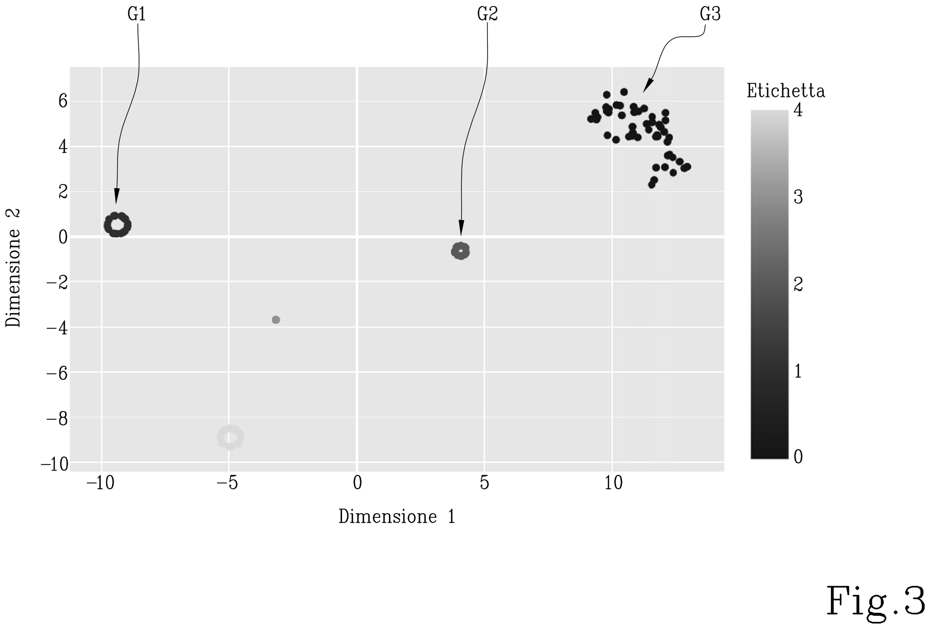

Therefore, figure 3 shows a step of information clustering according to two dimensions (dimension 1 and dimension 2); as it can be observed the information are grouped according to different groups (G1, G2, G3), with which corresponding labels are associated.

According to another aspect, the labelling step of said information received comprises a step of using a machine learning algorithm of semi-supervised type.

The labelling step, according to such semi-supervised machine learning algorithm, comprises a step of combining a small quantity of labelled data with a greater quantity of information (with no label).

The labelling step comprises also a step of identifying clusters or groups or patterns on labelled data, and to assign labels to information on the basis of said identified clusters or groups or patterns.

The step of labelling, according to such semi-supervised machine learning algorithm, comprises a step of information pre-processing.

The labelling step, according to such semi-supervised machine learning algorithm, comprises an auto-encoder generation or construction step. In such step, a plurality of auto-encoder is created, each one configured to recognize a specific type of mixture unbalance.

According to this aspect, the auto-encoder is able to detect anomalies or deviations not comprised in the recognized unbalance type.

According to an aspect, the labelling step comprises an auto-encoder training step, by means of labelled information relating to the specific type of unbalance which each auto-encoder should recognize.

According to another aspect, the method comprises an inference step, in which not labelled data are applied to each auto-encoder.

In this step, each auto-encoder rebuilds the not labelled data. If an auto-encoder can rebuild data precisely, these will be labelled as belonging to the unbalance type the auto-encoder has learned to recognize.

If an auto-encoder shows a high rebuilding error, it means that data do not belong to that kind of unbalance, and there it follows the analysis with the other auto-encoders up to identify the correct type.

The advantages of such method are an enlarged labelled dataset: i.e. the possibility to have a significantly greater data set available, thus increasing the quantity of information available for the next training step.

The models are able to recognize the different kinds of unbalance reliably, gradually improving with the increase in the available labelled data. According to another aspect, the method comprises a step of:
- receiving information from the respective control units 5 of a plurality of machines 1A; 1B having the same artificial intelligence control module 6, and wherein the second dataset comprises the aforesaid information having predetermined labels derived from the plurality of machines 1A; 1B.

The control model 6 of a single machine 1A, 1B can be essentially trained also on the basis of the information received from more machines 1A, 1B (preferably of the same type or having a control model 6 of the same type). According to another aspect, the second dataset comprises at least a portion of data of the first dataset.

Advantageously, in this way, the training step is carried out also by using a portion of the first data (or the pre-training data).

Yet, according to another aspect, the step of labelling information received from the control unit 5 is carried out on a centralized remote processor.

Yet, according to another aspect, the step of labelling information received from the control unit 5 is carried out on a processor which is univocally associated with said control unit 5. It is to be observed that such processor can be also remote with respect to the control unit 5; anyway, such processor is univocally associated with a machine 1A, 1B.

According to another aspect, according to the invention an **IT** product is provided to implement the previously described method, when loaded on a processing unit 7.

According to another aspect of the invention, a system for the production of liquid or semiliquid food products is provided, comprising:
- at least a machine 1A; 1B for the production of liquid or semiliquid food products, wherein said machine 1A; 1B is provided with:
- a processing container 2,
- a stirrer 3 arranged inside said container 2;
- a plurality of sensors S,
- a plurality of actuators 11, 12, 13,
- a control unit 5 comprising an artificial intelligence control module 6, connected to said sensors S and actuators and configured to define a pre-trained classifier CL, the control module 6 being trained using data of a first dataset;
- at least a processing unit 7, configured to carry out the steps of the previously described method.

According to another aspect of the system 1, said processing unit 7 is connected to said control unit 5 to transmit instructions for replacing the control module 6 with the additional artificial intelligence control model to the control unit 5 of said at least one machine 1A; 1B.

Moreover, according to a particular embodiment, said processing unit 7 is defined by a plurality of processors, distributed and connected to each other to exchange data.

According to another aspect, said processing unit 7 is of centralized and remote type with respect to the control unit 5.

According to another aspect, the processing unit 7 and said control unit 5 can be at least partially coincident; some of the functions of the processing unit 7 can be essentially carried out by the control unit 5.

It is to be observed that, according to another aspect, said processing unit 7 comprises a monitoring module 20, configured to receive the aforesaid information from the control unit 5.

It is to be observed that the monitoring module 20 is preferably arranged on board of the machine (1A, 1B).

According to an aspect, the monitoring module 20 is preferably integrated inside the control unit 5.

It is to be observed that, according to another aspect, the monitoring module 20 is arranged outside the machine (1A, 1B), and is operatively associated with more machines (1A, 1B).

The monitoring module 20 is configured to receive data from sensors and/or machine operating parameters.

Yet, according to another aspect, said processing unit 7 comprises a memory module 21, configured to carry out the step of receiving a plurality of information transmitted by sensors and/or actuators and/or by the control unit 5 of said machines 1A, 1B and to store said information.

It is to be observed that the memory module 21 comprises a first memory 21A and a second memory 21B. The first memory 21A is configured to store information received from the control unit 5. The second memory 21B is configured to store the labels, and relative association with the information received from the control unit 5.

According to another aspect, said processing unit 7 comprises a labelling module 22, configured to carry out the step of labelling said received information.

According to an aspect, the labelling module 22 is preferably configured to carry out the labelling step of said information received on the basis of balance/unbalance classes with respect to one or more ingredients of the mixture being processed in the container 2.

According to another aspect, said processing unit 7 comprises a training module 24, configured to carry out the aforesaid training procedure.

According to this aspect, said processing unit 7 comprises a supervision module 23 configured to process said information and to send a training procedure execution signal to the training module 24 on the basis of said information.

Moreover, the training module 24 is connected to the supervision module 23 and configured to carry out the aforesaid training procedure on the basis of the receiving said training procedure execution signal.

It is to be observed that the training module 24 is also connected to the memory module 21, to receive the plurality of information transmitted by sensors and/or actuators and/or the control unit of said machines 1A, 1B and to store said information.

The training module 24 is preferably arranged in a remote server.

As an alternative, the training module 24 can be integrated also in the control unit 5 of the specific machine (1A, 1B).

## Claims

1. A method, implemented by at least one computer (7), for optimizing the operation of at least a machine (1A; 1B) for the production of liquid or semiliquid food products, wherein said machine (1A; 1B) is provided with:
- a processing container (2),
- a stirrer (3) arranged inside said container (2);
- a plurality of sensors (S),
- a plurality of actuators (11, 12, 13),
- a control unit (5) comprising a pre-trained artificial intelligence control module (6), connected to said sensors (S) and actuators and configured to define a pre-trained classifier (CL), the control module (6) being trained using a first dataset;
the method comprising the following steps:
- labelling information received from the control unit (5) by assigning predetermined labels to said information, wherein said labels represent a balance of the ingredients in the mixture being processed in the container (2),
- running a training procedure of the artificial intelligence control module (6) using a second dataset comprising the aforesaid information having predetermined labels, to derive an additional artificial intelligence control module defining a classifier replacing the pre-trained artificial intelligence control module (6);
- transmitting instructions for replacing the control module (6) with the additional substitutive artificial intelligence control model to the control unit (5).

2. The method according to the preceding claim, wherein the additional artificial intelligence control module is, in its IT structure, identical to the pre-trained artificial intelligence control module (6).

3. The method according to any one of the preceding claims, wherein the step of transmitting instructions replacing the control module (6) with the additional artificial intelligence control model to the control unit (5) comprises a step of transmitting parameters representing the additional control module.

4. The method according to the preceding claim, wherein said additional pre-trained artificial intelligence control module comprises a neural network and the step of transmitting parameters representing the additional control module comprises a step of transmitting a plurality of training weights of the neural network.

5. The method according to any one of the preceding claims, wherein the step of labelling the information received from the control unit (5) by assigning predetermined labels to said information comprises a step of associating said information with labels which are at least representative of:
- a balanced class, corresponding to a mixture being processed, which is balanced with respect to one or more ingredients,
- and an unbalanced class, corresponding to a mixture being processed, which is unbalanced with respect to one or more ingredients.

6. The method according to any one of the preceding claims and claim 5, wherein the second dataset comprises labels which are at least representative of the balanced class, corresponding to a mixture being processed, which is balanced with respect to one or more ingredients.

7. The method according to any one of the preceding claims, wherein the machine (1) comprises a thermodynamic system (4) having a throttle element (12), a compressor (11), a condenser (13) and an evaporator (10), and wherein the step of labelling the information received from the control unit (5) by assigning predetermined labels to said information, wherein said labels are representative of a balance of the ingredients in the mixture being processed in the container (2), comprises a step of assigning said labels to the information on the basis of the value of one or more of the following parameters received from the control unit (5):
- a compactness or viscosity of the product being processed in the container (2);
- an operating temperature of the container (2);
- an operating temperature of the heat transfer fluid flowing into the evaporator (10) associated with the container (2);
- an operating temperature of the heat transfer fluid flowing out of the evaporator (10) associated with the container (2);
- an operating pressure of the heat transfer fluid flowing out of the compressor (11);
- an operating pressure of the heat transfer fluid flowing out of the evaporator (10);
- a rotation speed of the stirrer (3);
- a degree of opening of the throttle element (12).

8. The method according to any one of the preceding claims, wherein the step of labelling comprises a step of using a machine learning algorithm of unsupervised type.

9. The method according to the preceding claim, wherein said algorithm is a clustering algorithm.

10. The method according to any one of the preceding claims 8 or 9, wherein the step of labelling comprises a step of using clustering algorithms to identify patterns and/or groupings in the information.

11. The method according to any one of the preceding claims 1 to 7, wherein the step of labelling said received information comprises a step of using a machine learning algorithm of semi-supervised type.

12. The method according to any one of the preceding claims, comprising a step of:
- receiving information from the respective control units (5) of a plurality of machines (1a, 1b) having the same artificial intelligence control module (6), and wherein the second dataset comprises the aforesaid information having predetermined labels derived from the plurality of machines (1a, 1b).

13. The method according to any one of the preceding claims, wherein the second dataset comprises at least a portion of data of the first dataset.

14. The method according to any one of the preceding claims, wherein the step of labelling the information received from the control unit (5) is carried out on a remote centralized processor.

15. The method according to any one of claims 1 to 13, wherein the step of labelling the information received from the control unit (5) is carried out on a processor which is univocally associated with said control unit (5).

16. A system for the production of liquid or semiliquid food products, comprising:
- at least a machine (1A; 1B) for the production of liquid or semiliquid food products, wherein said machine (1A; 1B) is provided with:
- a processing container (2),
- a stirrer (3) arranged inside said container (2);
- a plurality of sensors (S),
- a plurality of actuators (11, 12, 13),
- a control unit (5) comprising an artificial intelligence control module (6), connected to said sensors (S) and actuators and configured to define a pre-trained classifier (CL), the control module (6) being trained using a first dataset;
- at least a processing unit (7), configured to carry out the steps of the method of the preceding claims 1 to 15, and wherein said processing unit (7) is connected to said control unit (5) to transmit instructions for replacing the control module (6) with the additional artificial intelligence control model to the control unit (5) of said at least one machine (1A; 1B).

17. The system according to claim 16, wherein said processing unit (7) is defined by a plurality of processors, distributed and connected to each other to exchange data.

18. The system according to any one of the preceding claims 16 to 17, wherein said processing unit (7) is of centralized type and remote with respect to the control unit (5).

19. The system according to any one of the preceding claims 16 to 18, wherein said processing unit (7) comprises a monitoring module (20), configured to receive the aforesaid information from the control unit (5).

20. The system according to any one of the preceding claims 16 to 19, wherein said processing unit (7) comprises a memory module (21), configured to carry out the step of receiving a plurality of information transmitted by sensors (S) and/or actuators and/or by the control unit of said machines (1A; 1B) and to store said information.

21. The system according to any one of the preceding claims 16 to 20, wherein said processing unit (7) comprises a labelling module (22), configured to carry out the step of labelling said received information.

22. The system according to any one of the preceding claims 16 to 21, wherein said processing unit (7) comprises a training module (24), configured to carry out the aforesaid training procedure.

23. The system according to claim 22, wherein said processing unit (7) comprises a supervision module (23) configured to process said information and to send a training procedure execution signal to the training module (24) on the basis of said information, and wherein the training module (24) is connected to the supervision module (23) and configured to carry out the aforesaid training procedure on the basis of the receiving of said training procedure execution signal.

24. Computer program containing instructions configured to carry out the method according to any one of the preceding claims, when loaded on the processing unit (7) of the system according to any one of claims 16 to 23.
